# EUROPEAN PATENT APPLICATION

(11) **EP 4 725 682 A1**
(43) Date of publication of application: **15.04.2026**
(21) Application number: 25197510.8
(22) Date of filing: 22.08.2025
(51) Int. Cl.: B29C 64/124, B29C 64/245, B29C 64/255, B29C 64/393, B33Y 10/00, B33Y 30/00, B33Y 50/02

(54) **THREE-DIMENSIONAL PRINTER FOR PRODUCING HIGH RESOLUTION STRUCTURES**

(30) Priority: 22.08.2024 US 202463685789 P
(71) Applicant: 3D Systems, Incorporated, Rock Hill, SC 29730 (US)
(72) Inventor: Sivaprasad, Akarsh, Nashua, New Hampshire (NH) (US); Sabo, David, San Diego, California (CA) (US)
(74) Representative: dompatent

(57) **Abstract**

A three-dimensional (3D) printing system (2) configured to manufacture a three-dimensional (3D) article includes a base (12), a build vessel (10), an air control system (16), a build plate (20), a light engine (30), and a controller. The build vessel is configured to contain a body of photocurable resin. The build vessel includes a transparent plate, a support frame, and a transparent sheet. The transparent plate has a planar upper surface. The support frame defines a conduit that extends to a peripheral edge of the transparent plate. The transparent sheet (64) is tensioned over the planar upper surface of the transparent plate (62) and extends over the support frame. The controller is programmed to operate the air control system to inject a controlled volume of air then to apply a controlled negative gauge pressure to the conduit. This has the effect of inflating and deflating the transparent sheet relative to the planar upper surface of the transparent plate.

## Description

### Cross-Reference to Related Applications

This non-provisional patent application claims priority to U.S. Provisional Application Serial Number 63/685,789, Entitled "Three-Dimensional Printer for Producing High Resolution Structures" by Akarsh Sivaprasad et al., filed on Aug 22, 2024, incorporated herein by reference under the benefit of U.S.C. 119(e).

### Field of the Invention

The present disclosure concerns an apparatus and method for fabrication of solid three dimensional (3D) articles of manufacture from radiation curable materials. More particularly, the present disclosure concerns an apparatus for producing customized and extremely precision 3D articles enabling pixel and voxel sizes with linear dimensions of less than 10 microns.

### Background

Three dimensional (3D) printers are in rapidly increasing use for manufacturing customized articles. One class of 3D printers includes stereolithography printers having a general principle of operation including the selective curing and hardening of radiation curable (i.e., photocurable) liquid resins. One type of stereolithography system includes a containment vessel holding the curable resin, a movement mechanism coupled to a support tray, and a light engine. The stereolithography system forms a three dimensional (3D) article of manufacture by selectively curing layers of the photocurable resin onto a lower surface of the support tray. There is a desire to produce 3D articles having "small" feature size tolerances that are less than 10 microns, less than five microns, less than 2 microns, or less than one micron in size. There is also a desire to produce such small feature size tolerances in 3D articles that are multiple centimeters or, or than 5 centimeters or more than 10 centimeters in dimension along one or more axes. Yet there is also a desire to efficiently produce such 3D articles.

### Summary

In an aspect of the disclosure, a three-dimensional (3D) printing system is configured to manufacture a three-dimensional (3D) article. The 3D printing system includes a base, a build vessel, an air control system, a build plate, a light engine, and a controller.

The build vessel is supported by the base and configured to contain a body of photocurable resin or ink or bioink. The build vessel includes a transparent plate, a support frame, and a transparent sheet. The transparent plate has a planar upper surface and a peripheral edge. The support frame laterally surrounds and supports the transparent plate. The support frame defines a conduit that extends to the peripheral edge of the transparent plate. The transparent sheet is tensioned over the planar upper surface of the transparent plate and extends over the support frame.

The air control system is fluidically coupled to the conduit. The build plate is coupled to a movement mechanism. The light engine is configured to selectively apply radiation to a build plane which is directly above the transparent sheet.

The controller is programmed to perform the following controller steps: (1) operate the air control system to inject a controlled volume of air into the conduit, the controlled volume of air inflating a volume of air between the transparent sheet and the transparent plate, (2) operate the air control system to apply a controlled negative gauge pressure to the conduit, the controlled negative gauge pressure extracting the air between the transparent sheet and the transparent plate until the transparent sheet presses against the planar upper surface of the transparent plate, (3) operate the movement mechanism to position a lower face of the build plate or the 3D article at the build plane, (4) operate the light engine to selectively irradiate and to harden a layer of the photocurable resin over the build plane to redefine the lower face, (5) operate the movement mechanism to move the lower face of the 3D article away from the build plane, and (6) form additional layers of the 3D article to complete fabrication of the 3D article, an individual layer formed by repetition of some or all of steps (1)-(5).

Controller step (1) is important because an initial lifting and peeling of the transparent sheet from the transparent plate requires an initially high pressure. As the sheet lifts, the required pressure decreases. Using a positive displacement of a controlled volume avoids over-pressurizing and potentially bursting the transparent sheet after the sheet begins to lift. The positive displacement also provides a very controlled geometry of the height of the transparent sheet over the transparent plate. Controller step (2) is important because it is a very rapid and effective way of extracting the air from the volume under the transparent sheet. Thus, controller step (1) is operated as a defined and controlled volume mode and controller step (2) is operated as a defined and controlled negative gauge pressure mode.

In one implementation, the transparent plate includes a notch along the peripheral edge of the transparent plate that is in fluid communication with the conduit. The transparent plate also defines a fluid channel recessed into the planar upper surface that is in fluid communication with the notch. The notch is a rectangular or oblique break or recess that interrupts the otherwise rectangular edge connecting to the planar upper surface. The notch can include a plurality of notches distributed around the peripheral edge of the transparent plate.

The notch provides an initial peel location that facilitates a progressive peeling of the transparent sheet away from the planar upper surface during controller step (1). The fluid channel further enhances the peeling action. The fluid channel also facilitates movement of the photocurable resin during steps (3) and (5).

In another implementation, the support frame includes an uppermost rim that laterally surrounds the transparent plate, and a clamping frame that laterally surrounds the uppermost rim of the support frame and clamps a peripheral edge of the transparent sheet. The transparent sheet is tensioned over the uppermost rim of the support frame and extends downward to the clamping frame.

The combination of the uppermost rim and the clamping frame help to hold the transparent sheet down over the planar upper surface of the transparent plate. This provides better dimensional accuracy than is possible with an unsupported or less well tensioned transparent sheet.

In yet another implementation, the support frame includes an uppermost rim that surrounds the transparent plate. At least a first portion of the uppermost rim is coplanar with or below the planar upper surface of the transparent plate. A second portion of the uppermost rim extends above the planar upper surface of the transparent plate. The planar upper surface of the transparent plate can be zero to 0.2 millimeters (mm) above the first portion of the uppermost rim.

The second portion of the uppermost rim being above the upper surface of the transparent plate facilitates air escaping from between the transparent sheet and transparent plate during controller step (2). Otherwise, pockets of air may be trapped. The first portion being coplanar with or below the upper surface improves tensioning of the transparent sheet over the upper surface. The range of zero to 0.2 millimeters (mm) avoids too large of a discontinuity between the first portion and the second portion.

In a further implementation, the air control system includes a peristaltic pump. The controller is programmed to operate the peristaltic pump to perform one or more of controller steps (1) and (2). A peristaltic pump can be used to provide a reasonably accurate volumetric injection for step (1) or a vacuum for step (2).

In a yet further implementation, the air control system includes a motorized air cylinder and a vacuum pump. The controller is programmed to displace a piston of the air cylinder to perform controller step (1). The controller is programmed to open a valve to fluidically couple the vacuum pump to the conduit to perform controller step (2). A motorized air cylinder provides a very accurate volumetric control for step (1). A vacuum pump with a regulator can provide a very accurate vacuum for step (2).

In another implementation, injected volume of air is in a range of 1.0 to 3.0 milliliters (mL) per 10 square centimeters (cm) of an area of the transparent sheet over the upper surface of the transparent plate. This injected volume is enough to replenish oxygenation of the transparent sheet over the full area. At the same time it is not too extreme to cause excess pressure and damage to the transparent sheet.

In yet another implementation, the transparent sheet is vertically lifted by a distance d above the upper surface of the transparent plate. The maximum distance d over an area of the upper surface of the transparent plate is within a range of 1 to 3 millimeters (mm). The maximum value for d occurs at a central location or portion of the transparent sheet relative to the peripheral edge of the transparent plate. This value for d is enough to replenish oxygenation of the transparent sheet over the full area. At the same time, it is not an amount that will cause damage to the transparent sheet.

### Brief Description of the Figures

FIG. 1 is an isometric drawing depicting an embodiment of a three-dimensional (3D) printing system configured to manufacture a three-dimensional (3D) article.
FIG. 2 is an isometric drawing illustrating an embodiment of certain components of a 3D printing system.
FIG. 3 is an isometric cutaway drawing depicting components of an elevator and an upper portion of a build platform.
FIG. 4A is an isometric drawing of a portion of a print engine with a build platform positioned in a forward (+X) position that is laterally forward relative to a build plane.
FIG. 4B is an isometric drawing of a portion of a print engine with a build platform positioned in a backward (-X) position that is laterally coincident with a build plane.
FIG. 5A is a side sectional drawings of a portion of a print engine with a build platform in a forward (+X) position that is laterally forward and nonoverlapping relative to a build plane.
FIG. 5B is a side sectional drawings of a portion of a print engine with a build platform in a backward (-X) position that is laterally coincident with a build plane.
FIG. 6 is an isometric drawing of a build vessel in isolation.
FIG. 7 is an isometric drawing of an assembly that includes a support frame, a transparent plate, and a transparent sheet that is tensioned over the transparent plate.
FIG. 8 is a cross-sectional view of a portion of a build vessel to illustrate features of a support frame, a transparent plate, a transparent sheet whose peripheral edge is held by a clamping frame.
FIG. 9 is an isometric view of a first embodiment of a transparent plate.
FIG. 10 is an isometric view of a second embodiment of a transparent plate.
FIG. 11 is an isometric cutaway view of a portion of a build vessel.
FIG. 12 is an electrical block diagram of an embodiment of a 3D printing system.
FIG. 13A is a schematic diagram of a first embodiment of an air control system coupled to a build vessel.
FIG. 13B is a schematic diagram of a second embodiment of an air control system coupled to a build vessel.
FIG. 14 is a flowchart of a first embodiment of a method of manufacturing a three-dimensional (3D) article.
FIG. 15 is a flowchart of a calibration procedure for canceling out or compensating for Z-axis variation errors that occur during a lateral translation along an X-axis.
FIG. 16 is a flowchart of a second embodiment of a method of manufacturing a three-dimensional (3D) article.
FIG. 17 is a flowchart of a third embodiment of a method of manufacturing a three-dimensional (3D) article.
FIG. 18 is a cross-sectional view of a first portion of a build vessel with emphasis on backward and side portions of a rim over which a transparent sheet is tensioned.
FIG. 19 is a cross-sectional view of a second portion of a build vessel with emphasis on a forward side portion of a rim over which a transparent sheet is tensioned.

### Detailed Description of the Preferred Embodiments

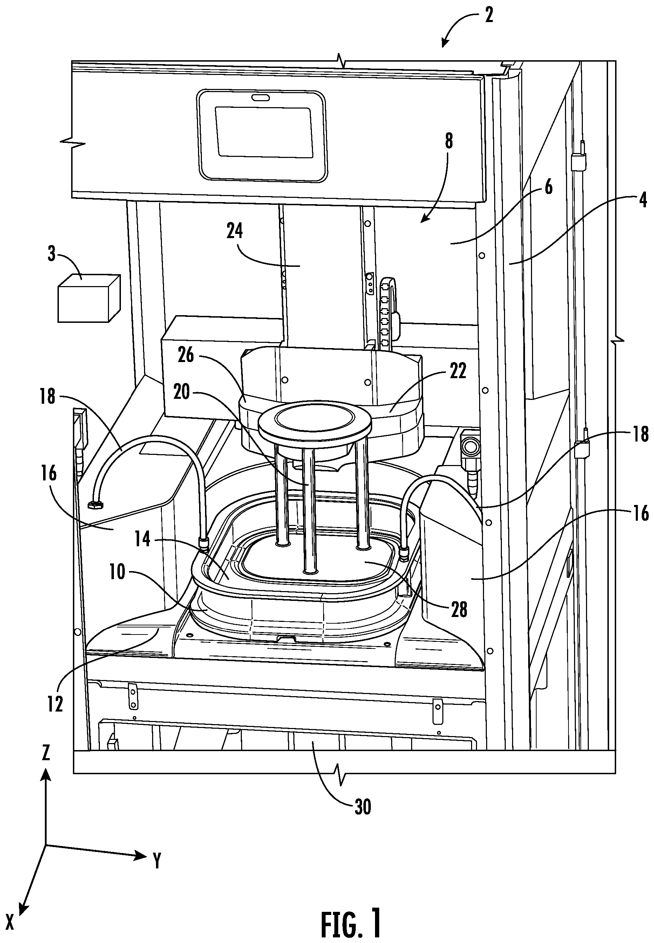

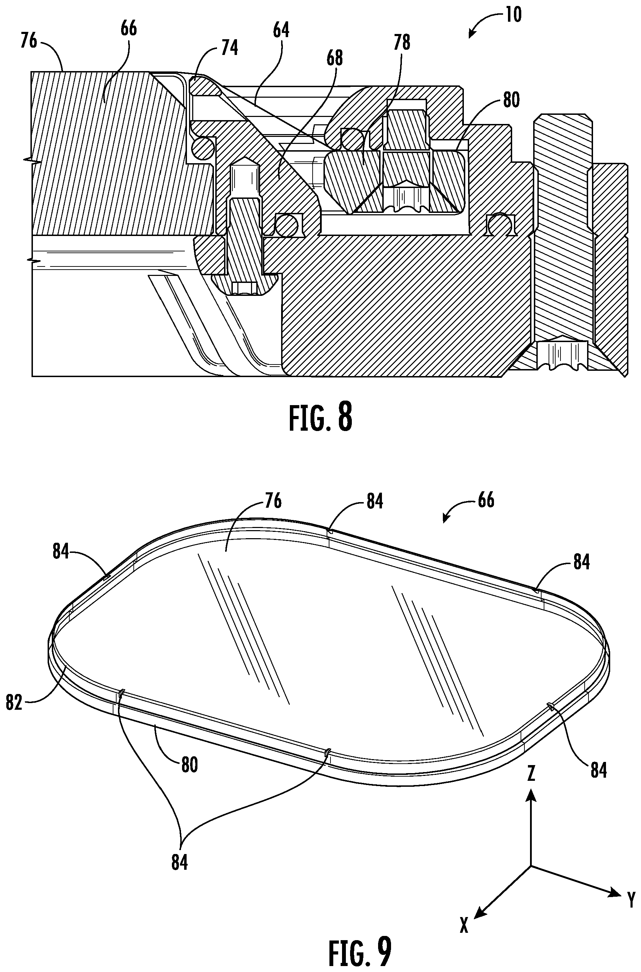

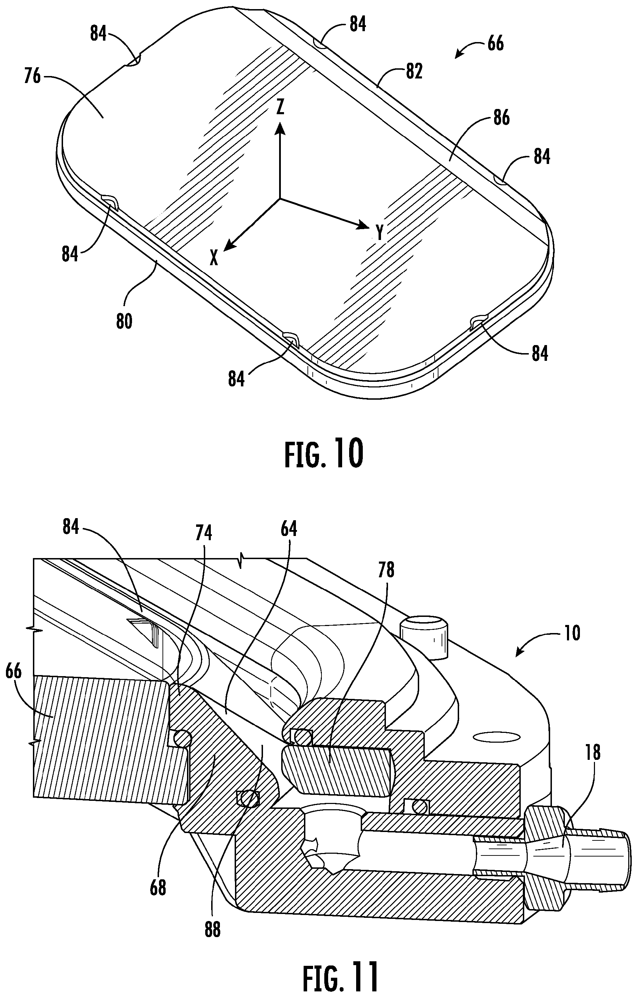

FIG. 1 is an isometric drawing depicting an embodiment of three-dimensional (3D) printing system 2 configured to manufacture a three-dimensional (3D) article 3. In describing 3D system 2, mutually perpendicular axes X, Y, and Z will be used. Axes X and Y are generally horizontal or lateral axes. Axis Z is a vertical axis that is aligned or generally aligned with a gravitational reference. In using the word "generally" it is implied that a limitation that is "generally" true is by design but to within manufacturing tolerances. Additionally angular axes theta-X, theta-Y, and theta-Z are rotations about the X, Y, and Z axes respectively. In the figures that follow, like element numbers indicate like elements although the same element number may be used for different embodiments or implementations of the same element. For example, FIGS. 9 and 10 illustrate two embodiments of a transparent plate 64.

3D printing system 2 includes an outer housing 4 that contains an internal chamber 6 housing a print engine 8. The 3D printing system 2 supports a build vessel 10 upon a base 12. Build vessel 10 is configured to contain a photocurable resin 14. Photocurable resin 14 is a liquid polymeric material configured or formulated to be selectively hardened with a selective application of radiation having a wavelength in the blue to ultraviolet range or usually within a range of 100 to 500 nanometers (nm). The photocurable resin generally contains a monomer and catalyst. The catalyst facilitates polymerization and/or crosslinking of the monomer in response to being irradiated. Photocurable resin 14 can also include other components such as colorants, fillers, and additional polymeric materials. Photocurable resins 14 are generally known in the field of stereolithography, 3D printing of plastics, and biologic 3D articles 3.

The 3D printing system 2 includes an air control system 16 which is fluidically coupled to a tube or conduit 18 which includes an internal conduit 18 defined within the build vessel 10. The air control system 16 can include one or more of controllable air handling devices including a peristaltic pump, a vacuum pump, a motorized air cylinder (having a piston that moves under the action of a motor rotation), a vacuum bottle, a controllable valve, a regenerative blower, or other types of air pumps. The action of the air control system 16 will be further described infra.

The 3D printing system 2 includes a build platform 20 that is mounted to an elevator 22. The elevator 22 is coupled to a movement mechanism 24. Movement mechanism 24 is configured to position and translate the elevator 22 and build platform 20 along one or more axes. In an illustrative embodiment, the movement mechanism 24 is configured to independently translate the build platform 20 along the lateral X-axis and the vertical Z-axis. In the illustrated embodiment, elevator 22 includes an elevator actuator 26 that is operable to controllably change a height of the elevator along the Z-axis and an orientation of the elevator with respect to the X and Y axes. The platform 20 includes a build plate 28 for supporting the 3D article 3 on a lower surface.

The 3D printing system 2 includes a light engine 30. In an illustrative embodiment, the light engine 30 includes a projection light engine 30. The projection light engine 30 includes a light source, a spatial light modulator, and projection optics. The light source includes a plurality of light emitting diodes that generate radiation in a wavelength range of blue to ultraviolet (or typically in a range within 100 to 500 nm). The spatial light modulator includes an array of switchable micro-mirrors on a chip. The micro-mirrors can be actuated to turn individual pixels on and off - controllably deflecting light either to a build plane or a light trap. The projection optics focus the pixels upon the build plane. Such a projection light engine 30 is known in the art for stereolithography. Light engines known in the art for stereolithography can employ other components including ultraviolet lasers, steering optics, galvanometer-actuated steering mirrors, and linear arrays of ultraviolet light emitting diodes.

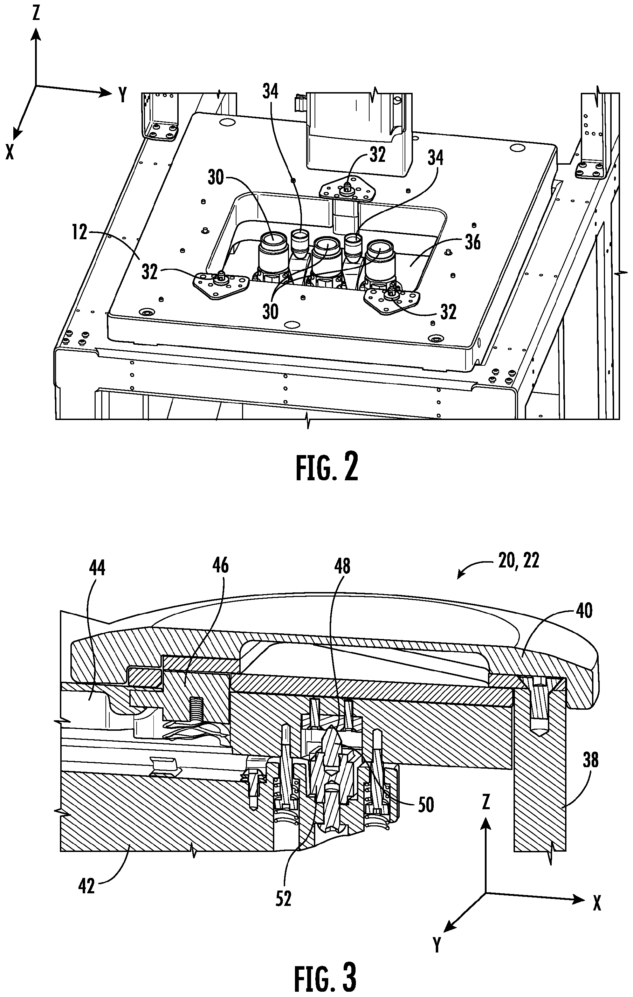

FIG. 2 is an isometric drawing illustrating certain components of the 3D printing system 2. Base 12 is a granite base for supporting the build vessel 10. Base 12 includes leveling actuators 32 that engage a lower side of the build vessel 10 for leveling build vessel 10. In one embodiment, the actuators 32 individually include a threaded rod received into a nut. The nut is coupled to a motor. Rotation of the motor thus causes the threaded rod to move vertically. In the illustrative embodiment, two elevator actuators 26 (FIG. 1) are designed to operate the same way.

In the illustrated embodiment are three projection light engines 30. Mounted near the projection light engines 30 are two Z-height sensors 34. The Z-height sensors 34 are individually configured to output a signal indicative of a distance to a horizontal surface above the sensor 34. In an illustrative embodiment, the sensors 34 are confocal distance sensors 34. Confocal distance sensors 34 can be configured to utilize monochromatic or polychromatic light and are well known in the art for high accuracy distance measurements. As a first alternative embodiment, the sensors 34 can be distance sensors based upon lasers. Some direct a beam at a small oblique angle relative to a surface normal and receive the beam with a line of sensors. The principle of triangulation is used to determine distance. As a second alternative, the sensors 34 can operate based upon interferometry in which emitted and reflected light from a laser generates an interference pattern based upon a distance. All such sensors are known in the art for precision distance measurement.

In the illustrated embodiment, the light engines 30 and sensors 34 are mounted to move together in tandem along axes X and Y. A lateral movement mechanism 36 is configured to move the combination of the light engines 30 and sensors 34 along X and Y. The lateral movement mechanism 36 includes a stacked pair of linear motors including an X-motor and a Y-motor. The motors are individually coupled to a lead screw that is received into a threaded nut. Rotation of the lead screw by the motor drives the nut along either the X-axis or Y-axis. Linear motors driving lead screws to provide motion along various axes are known in the art for 3D printers and robotics.

FIG. 3 is an isometric cutaway drawing depicting components of the elevator 22 and upper portion of the build platform 20. The build platform 20 includes a plurality of vertical rods 38 that couple the build plate 28 to a support plate 40. The elevator 22 includes a lower support 42 and upper support 44. The lower support 42 includes the elevator actuators 26 that engage the upper support (discussed with respect to FIG. 1). The elevator 22 also includes an electromagnet 46 for securing support plate 40 to the upper support 44. In the illustrated embodiment, the electromagnet includes three electromagnets 46 that are spaced apart over the upper support 44.

The upper support 44 includes a downward facing datum 48. The lower support includes a pin 50 with a spherical tip that engages the downward facing datum 48. As the actuators 26 are operated, the upper support 44 rotates around the pin 50 which has the effect vertically and angularly positioning the upper support 44 and hence the build platform 20. Between the pin 50 and the lower support is a load sensor 52.

The load sensor 52 outputs a signal that is indicative of a force exerted by the datum 48 onto the pin 50. This signal is thus indirectly indicative of a force exerted upon the build plate 28 by the photocurable resin 14. In an illustrative embodiment, the load sensor 52 is a piezoelectric based load sensor or load cell which has a piezoelectric crystal that outputs a voltage that correlates with a vertical force between the datum 48 and the pin 50. Such load cells are known in the art for measuring forces in various mechanical devices.

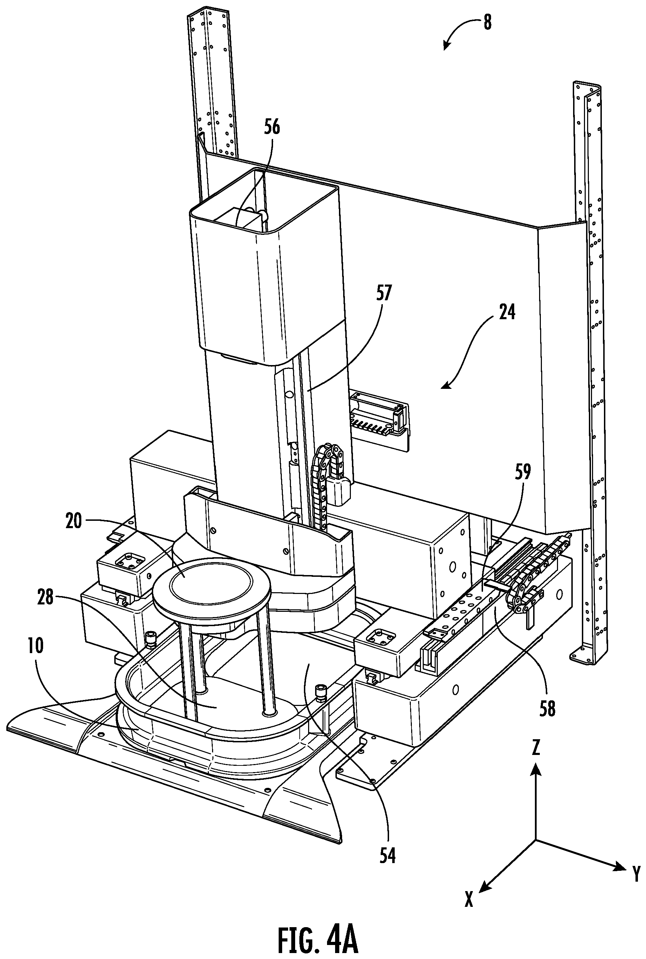

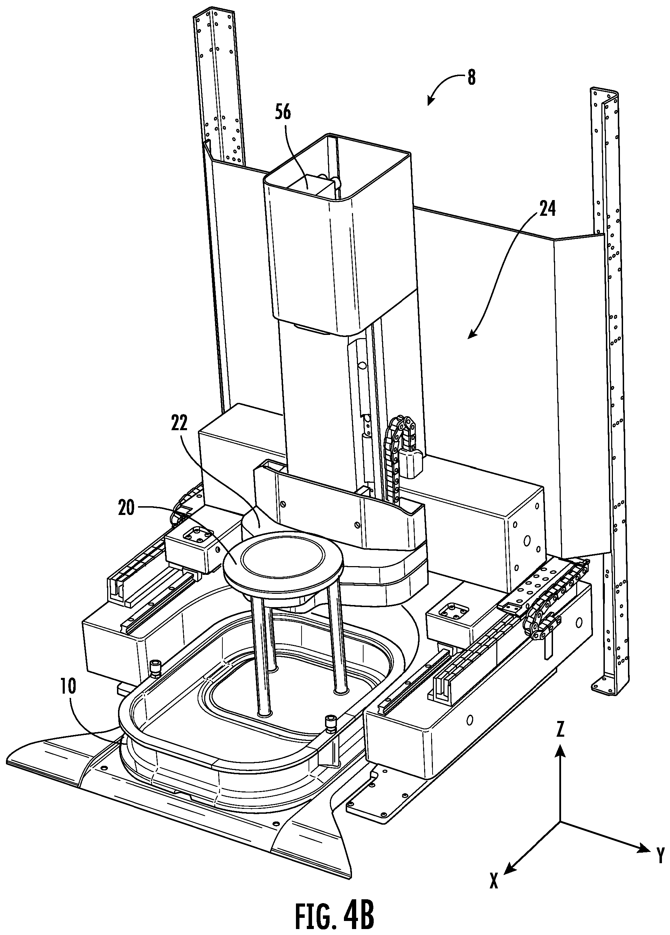

FIGS. 4A and 4B are isometric drawings of the print engine 8 in 4A forward (+X) and 4B backward (-X) positions of the elevator 22 and build platform 20. In FIG. 4A, the build platform 20 is positioned forward of a build plane 54. In the illustrated position, the build plate 28 does not laterally overlap with build plane 54. The build vessel 10 has forward (+X) and backward (-X) ends with respect the X-axis. In 4A, the build platform 20 is positioned at the forward (+X) end and the build plane 54 occupies the backward (-X) end of the build vessel 10.

In the illustrated embodiment, the movement mechanism 24 includes a vertical movement mechanism 56 and a horizontal movement mechanism 58. The vertical movement mechanism 56 is configured to position and translate the elevator 22 and build platform 20 along the vertical Z-axis. The vertical movement mechanism 56 is in turn mounted to the horizontal movement mechanism 58. The horizontal movement mechanism is configured to position and translate the vertical movement mechanism 56, the elevator 22, and the build platform 20 along the X-axis. Both mechanisms 56 and 58 are configured to slide along linear bearings respectively 57 or 59 over a supporting beam or block.

An embodiment of the vertical movement mechanism 56 includes a motorized ball bearing screw mechanism or otherwise referred to as a ball screw mechanism. A ball screw mechanism includes a vertical screw shaft that passes through a ball nut. The ball nut contains recirculating steel balls and translates vertically. The vertical screw shaft has helical channels that engage the recirculating balls. The elevator 22 includes the ball nut. A motor is coupled to the vertical screw shaft and is configured to selectively rotate the vertical screw shaft. As the vertical screw shaft rotates, the action of the vertical screw shaft upon the ball nut translates the elevator upward and downward depending on a direction of rotation. Such translation mechanisms are known in the art for precision positioning along vertical, horizontal, and oblique axes. Other embodiments are possible such as a lead screw and nut system or a rack and pinion mechanism or a motorized belt/pulley system and are all known in the art for linearly translating components along various axes. The horizontal movement mechanism 58 can also be a ball screw mechanism or any of the aforementioned known mechanisms.

In an alternative embodiment, the movement mechanism 24 can include a horizontal movement mechanism mounted to a vertical movement mechanism. In such an alternative embodiment, the vertical movement mechanism vertically positions and translates the horizontal movement mechanism. The build platform 20 in the alternative embodiment would be mounted to the horizontal movement mechanism. Both the illustrated and alternative embodiments are functionally equivalent in that the movement mechanism 24 is configured to position and translate the build platform 20 along horizontal (X) and vertical (Z) axes.

FIG. 4B illustrates the build platform 20 positioned at the backward (-X) or print position at the backward (-X) end of the build vessel. In the backward (-X) position, the build platform 20 is positioned to be laterally coincident or overlapping with the build plane 54.

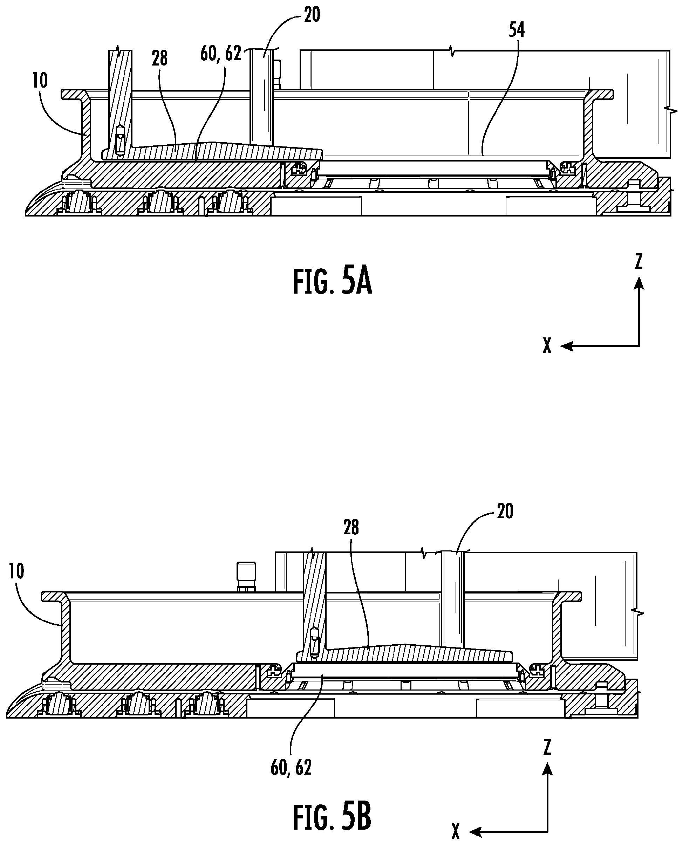

FIGS. 5A and 5B are side sectional drawings of a portion of the print engine 8 with the build platform 20 and build plate 20 at forward (5A) and backward (5B) positions. The build plate 28 has a lower surface 60 that supports the 3D article 3. A lower face 62 of the build plate 28 or 3D article 3 can be defined as a lower surface 62 that is parallel to, in facing relation with, coplanar with, or coincident with the build plane 54 depending upon vertical and horizontal positioning.

In FIG. 5A, the build plate 28 is positioned at the forward (+X) or "non-print" position. The lower face 62 is either coplanar with or parallel to the build plane 54. In FIG. 5B, the build plate 28 and hence the lower face 62 is positioned coincident with or above the build plane 54 which is the backward (-X) or "print" position.

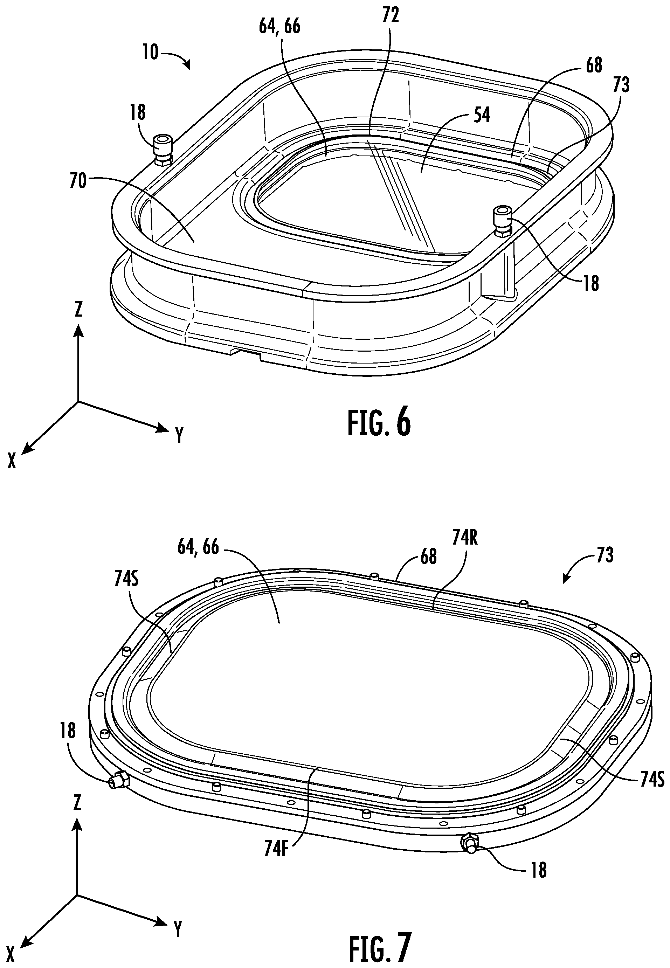

FIG. 6 is an isometric drawing of the build vessel 10 in isolation. As will be further discussed infra, the build plane 54 is defined above a combination of a flexible transparent sheet 64 above or over a rigid transparent plate 66. The transparent plate 66 is formed from a rigid material that is transparent to radiation in the blue to ultraviolet radiation range. Examples of rigid plate material include optical glass or quartz.

The transparent sheet 64 is "semipermeable" in that it is transmissive of an inhibitor such as oxygen. The transparent sheet is "transparent" in the sense that it is transparent to radiation in blue to ultraviolet wavelengths or about 500 nm (nanometers) to 100 nm. One example of a suitable transparent sheet is a fluoropolymer with optical clarity and gas permeability such as Teflon^{™} AF 2400. Other polymeric sheet materials can be suitable for the particular application.

The build plane 54 is generally defined as a generally planar and lateral area over which the light engine 30 operates. The build plane 54 is directly above the transparent sheet 64 and typically less than about 1 millimeter or less than about 0.5 millimeter above the transparent sheet 64. In illustrative embodiments, the build plane 54 is less than 250 microns, less than 200 microns, or less than 100 microns above the transparent sheet 64. The exact vertical distance of the build plane 54 above the transparent sheet 64 is affected by composition of the photocurable resin 14, and thickness and oxygen permeability of the transparent sheet 64, a method of delivering inhibitor to the transparent sheet 64, and a composition of the inhibitor itself.

The transparent sheet 64 and plate 66 are supported by a support frame 68. The build vessel 10 has a lower portion 70 having an opening 72 that is closed off by an assembly 73 that includes the support frame 68, the transparent plate 66, and the transparent sheet 64. FIG. 7 is an isometric drawing showing the assembly 73 in isolation. The conduit 18 communicates to a fluidic space between the transparent sheet 64 and the transparent plate 66. In one embodiment, a replaceable desiccant can be disposed in fluid communication with the fluidic space between the transparent sheet 64 and the transparent plate 66 to prevent a fluid layer from accumulating on a lower surface of the transparent sheet 64.

FIG. 8 is a cross-sectional view of a portion of the build vessel 10. The support frame 68 has an uppermost surface or rim 74 that laterally surrounds the transparent plate 66 on all sides. The transparent plate 66 has an upper surface 76 that is coplanar with or above or below the rim 74. In the illustrated embodiment, the upper surface 76 is between zero and 0.2 millimeter (mm) above the rim 74.

The transparent sheet 64 is tensioned over the rim 74 and across the upper surface 76 of the transparent plate 66. The support frame 68 supports or includes a clamping frame 78 that clamps and secures a peripheral edge 80 of the transparent sheet 64. The transparent sheet 64 slopes downward from the rim 74 to the clamping frame 78 on all sides of the transparent plate 66.

FIG. 9 is an isometric view of a first embodiment of a transparent plate 66 in isolation. Transparent plate 66 has opposing top or upper 76 and lower 80 surfaces and a peripheral edge 82. Formed into the upper surface 76 and along the peripheral edge 82 are a plurality of notches or recesses 84. The notches 84 are oblique relative to a vertical (Z) axis and a lateral (X or Y) axis and slope down from the upper surface 76. At the notches 84, the transparent sheet 64 is separated from the transparent plate 66. The conduit 18 is fluidically routed and coupled to the notches 84 which facilitates lifting of the transparent sheet 64 from the transparent plate 66 when a controlled volume of fluid is injected into the conduit 18.

FIG. 10 is an isometric view of a second embodiment of the transparent plate 66. In this embodiment, the notches 84 have an arcuate recessed geometry with arcuate vertical surfaces and horizontal surfaces. Additionally, a fluid channel 86 is formed into or recessed into the upper surface 76 of the transparent plate 66. Fluid channel 86 has an arcuate cross sectional geometry when viewed in cross section defined by X and Z axes. The fluid channel further facilitates lifting of the transparent sheet 64 off of the transparent plate 66 when pressure is applied to the conduit 18. The fluid channel 86 also facilitates replenishing photocurable resin 14 to the build plane 54 during a 3D printing process.

FIG. 11 is an isometric cutaway view of a portion of the build vessel 10. The conduit 18 is shown for applying air pressure to a space 88 communicating to the notches 84 which facilitate injection and removal of air between the transparent plate 66 and the transparent sheet 64.

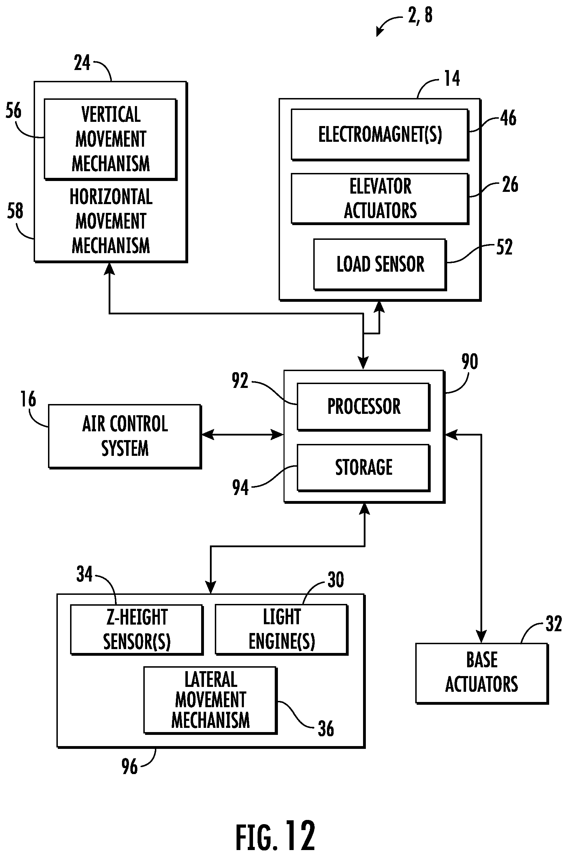

FIG. 12 is an electrical block diagram of the 3D printing system 2. 3D printing system 2 includes a controller 90 that is electrically and/or wirelessly coupled to components including the elevator 14, the air control system 16, the movement mechanism 24, the base actuators 32, and imager 96 and subcomponents shown within each of the components. The controller 90 includes a processor 92 and a storage device 94. The storage device 94 is nonvolatile or non-transient and stores software instructions. When the software instructions are executed by the processor 92, the components and subcomponents are individually and/or collectively monitored and/or controlled.

The controller 90 can be a single module co-located with the print engine 8 and/or include modules, computers, and/or servers that are spaced or remote from print engine 8. Controllers including processors and storage subsystems are well known in the art for control of electromechanical systems.

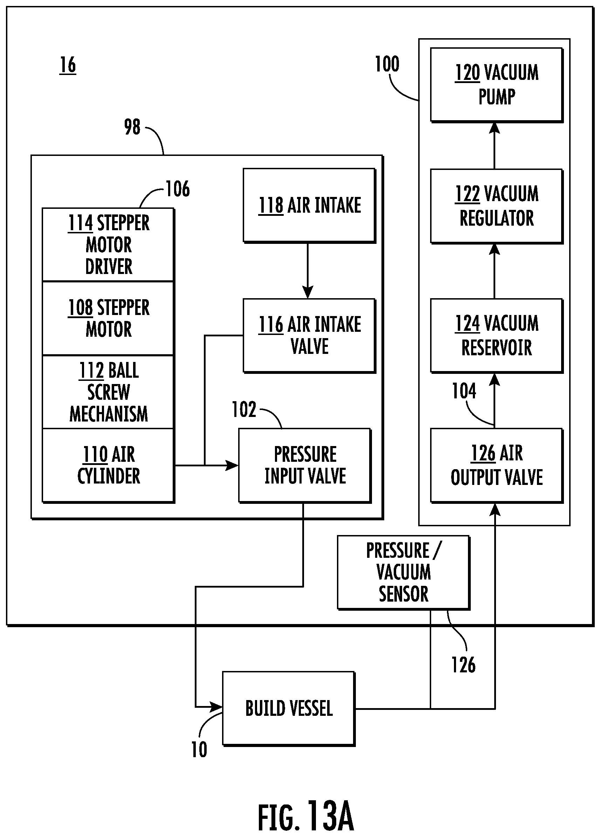

FIG. 13A is a schematic diagram of a first embodiment of the air control system 16 coupled to the build vessel 10. Air control system 16 includes two major subsystems including a displacement pump 98 and a vacuum system 100 that can individually be controllably fluidically coupled to the build vessel 10 by input and output valves 102 and 104 respectively.

The displacement pump 98 includes a pumping device 106 which includes a stepper motor 108 that linearly drives a piston of an air cylinder 110 to inject a controlled volume of air into the build vessel 10. A ball screw mechanism 112 converts rotational motion of the stepper motor 108 into linear translation of the piston within the air cylinder 110. A stepper motor driver 114 receives signals from controller 90 and then electrically drives the stepper motor 108. An air intake valve 116 is opened as required to allow an air intake 118 to recharge the air cylinder 110 with air with the pressure input valve 102 is closed.

When it is time to pressure-lift the transparent sheet 64 above the transparent plate 66, the pressure input valve 102 is opened and the stepper motor 108 drives the piston of the air cylinder 110 to inject a controlled volume of air between the transparent sheet 64 and the transparent plate 66. Then the pressure input valve 102 is closed. Alternatives to the illustrated embodiment of displacement pump 98 are possible, such as a peristaltic pump or a motor-driven syringe pump, to name two examples.

The vacuum system 100 includes a vacuum pump 120, a vacuum pressure regulator 122, and a vacuum reservoir 124. The controller 90 opens the air output valve 104 in order to evacuate a space between the transparent sheet 64 and the transparent plate 66. Alternatives to the illustrated vacuum system can include devices such as a spring loaded bellows or a spring loaded diaphragm to name two examples. Controller 90 is also coupled to a pressure and/or vacuum sensor 126 which is configured to monitor an air pressure level in the conduit 18.

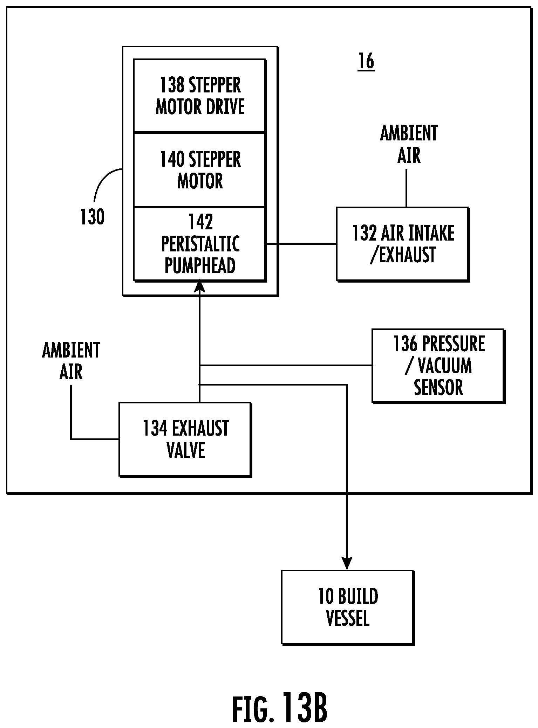

FIG. 13B is a schematic diagram of a second embodiment of the air control system 16 coupled to the build vessel 10. Air control system 16 includes a peristaltic pump 130, an air intake / exhaust conduit 132, an exhaust valve 134, and a pressure / vacuum sensor 136. The peristaltic pump 130 includes a stepper motor driver 138 coupled to a stepper motor 140 that rotationally drives a peristaltic pump head 142.

To generate a controlled volume of air the peristaltic pump 130 is operated with the stepper motor 140 turning a controlled number of "forward" rotational steps to displace a the controlled volume of air to the conduit 18 of the build vessel, thus inflating the transparent sheet 64 above the transparent plate 66. To generate a vacuum, the peristaltic pump 130 is operated with the stepper motor 140 turning in "reverse" with the rotational motion governed by a required negative gauge pressure sensed with the pressure / vacuum sensor 136. The exhaust valve 134 is opened before switching between forward and reverse.

Other variations for the air control system 16 are possible. As a first example, a combination of a peristaltic pump and vacuum source can be configured to perform a similar function. A second example can be a set of two peristaltic pumps with different tube diameters to allow a "fine" and "coarse" adjustment of fluid pressure and displacement.

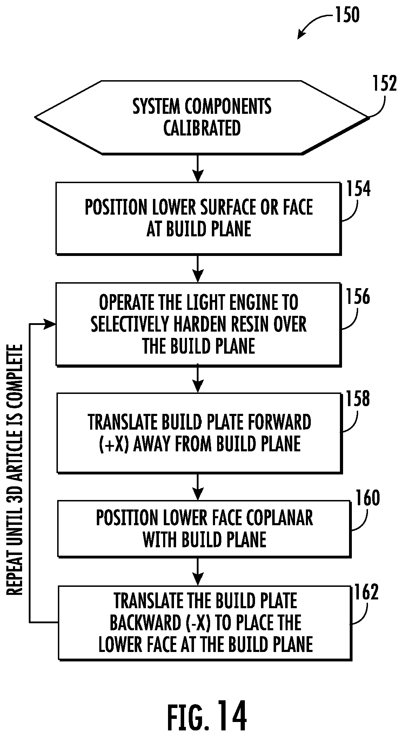

FIG. 14 is a flowchart of a first method 150 of manufacturing a 3D article 3. At initial condition 152, components of the 3D printing system 2 have been calibrated. Calibration can include operating actuators 32 to level the build vessel 10 and correlating a position of the lower face 62 of build plate 28 (and later the lower face 62 of 3D article) in relation to the build plane 54 with a signal from the force sensor 52. Additional calibration can include a correlation of the vertical position of the lower face 62 above the build plane 54 with a motor encoder value monitored for the vertical movement mechanism 56. Additional calibration details will be disclosed infra.

According to 154, the movement mechanism 24 is operated to position the lower surface 60 of build plate 28 at or coincident with build plane 54. Step 154 may include a single downward move or a combination of vertical and lateral moves. The lateral (-X) position at step 154 is illustrated in FIGS. 4B and 5B.

According to 156, the light engine 30 is operated to selectively irradiate the build plane 54. The photocurable resin 14 is thus selectively hardened over the build plane 54 which defines and accretes a new lower face 62 onto the 3D article 3.

According to 158, the movement mechanism 24 is operated to translate the build plate forward (+X) away from the build plane 54 and over the first opposed end (+X) of the lower portion 70 of the build vessel 10. The lateral (+X) position after step 158 is illustrated in FIGS. 4A and 5A.

According to 160, the movement mechanism 24 is operated to position the lower face 62 to be coplanar with the build plane 54. In an illustrative embodiment, the movement mechanism raises the lower face 62 by one layer thickness.

According to 162, the movement mechanism is operated to translate the build plate 28 backward (-X) and to position the lower face 62 coincident with build plane 54. Steps 156 to 162 are repeated until the 3D article 3 is fully fabricated.

In an alternative embodiment, the lower face 62 is vertically raised between steps 156 and 158. Step 160, as before, includes moving the lower face 62 to be coplanar with the build plane 54.

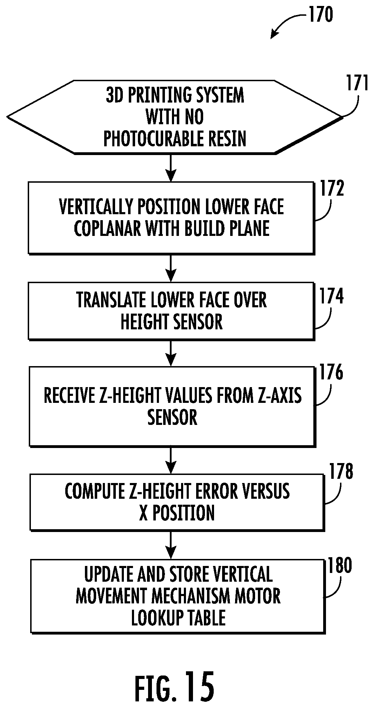

FIG. 15 is flowchart of a calibration procedure 170 to cancel out small X-axis induced vertical positional errors that become very significant when small geometries smaller than 10 microns are fabricated. As the horizontal movement mechanism 56 translates the build plate 28 along the X-axis, a small vertical wobble of the lower face 62 can occur due to imperfect linear bearings and other factors. The small vertical wobble results in Z-height positional errors along the X-axis. The wobble can have an amplitude of about 2 microns even with a granite support. Method 170 is a way to compensate or correct the Z-height positional errors. According to 171, the 3D printing system 2 is provided with an empty (no photocurable resin 14) build vessel 10.

According to 172, the vertical movement mechanism 56 is operated to position the lower surface 60 of the build plate 28 coincident with or near the build plane 54. According to 174, the horizontal movement mechanism 58 is operated to translate the lower surface 60 over the Z-height sensor 34.

According to 176 - concurrent with 174, the controller 90 receives a signal from Z-height sensor 34 that is indicative of Z-axis values defining a vertical height of the lower surface 60 at varying X-axis coordinates. According to 178, the controller 90 compares an expected height with a measured height of lower surface 60 to determine a Z-height error versus an X-coordinate. The controller 90 then stores Z-height correction values in a look-up table for the vertical movement mechanism 56 correlated with a position in X. The lookup table values can then be used with any of methods 150, 200, and 300.

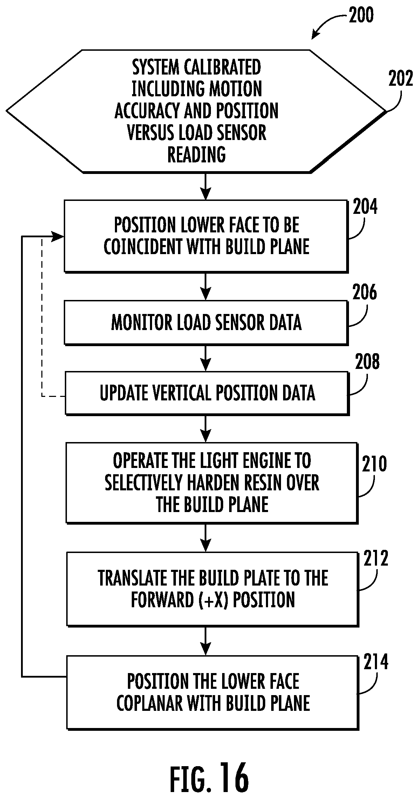

FIG. 16 is a flowchart of a second method 200 of fabricating a 3D article 3. According to 202, the 3D printing system 2 has been calibrated in a manner that includes a calibration according to step 152 of method 150 as well as method 170. In addition, the calibration includes a previously stored correlation between a height of the lower face 62 and a signal from load sensor 52 for a photocurable resin used for method 200. As the lower face 62 is moved closer to the transparent sheet 64, a normal force exerted on the lower face 62 will increase. According to 202, this correlation has been measured and is stored - as a lookup table and/or correlation coefficient.

According to 204, the vertical movement mechanism 56 is operated to position the lower face 62 to be coincident with the build plane 54 at the backward (-X) position. According to 206, the controller 90 receives information from the load sensor 52. According to 208, the controller 90 determines a height of the lower face 62 based upon the received load sensor 52 information. If the height is measurably and significantly different from the build plane 54 height, the controller determines an error and then updates vertical positional data for the vertical movement mechanism 56. In an optional embodiment, step 204 is partially repeated with vertical movement to correct an error above a certain threshold.

According to 210, the light engine 30 is operated to selectively irradiate the photocurable resin at the build plane 54. According to step 212, the movement mechanism 24 is operated to translate the build plate 28 along the X-axis to the forward (+X) position that is laterally forward from the build plane 54.

According to 214, the movement mechanism 24 is operated to position the lower face 62 to be coplanar with the build plane 54. This can include raising the lower face 62 by one layer thickness. This also factors in an error correction determined during steps 206 and 208.

Steps 204 to 214 are then repeated to complete fabrication of the 3D article 3. Vertical motions caused by the vertical movement mechanism 56 utilize the latest of the data determined in steps 206 and 208. Additionally, during horizontal movements, the Z-motor dynamically adjusts for mechanical errors using a lookup table stored during method 170.

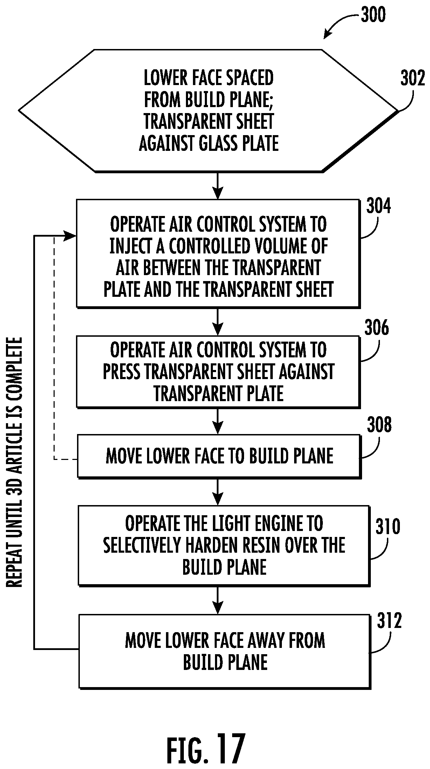

FIG. 17 is a flowchart of a third method 300 for fabricating a 3D article 3 using a 3D printing system 2. Method 300 can be performed using a 3D printing system 2 as described in FIGS. 1-11 or with a somewhat different system such as with a movement mechanism 24 that only provides vertical motion and not horizontal motion. Method 300 is performed using a build vessel 10 coupled to an air control system 16 that functions similar the description supra. Embodiments of such an air control system 16 are described with respect to FIGS. 13A and 13B.

According to 302, a 3D printing system 2 starts with a lower face 62 spaced from the build plane 54. The spacing between the lower face 62 and build plane 54 can be vertical and/or horizontal. Also according to 302, a transparent sheet 64 is tensioned and/or pressed against a transparent plate 66.

According to 304, the air control system 16 is operated to inject a controlled volume of air between the transparent plate 66 and the transparent sheet 64. In response to step 304, the transparent sheet 64 rises above a central portion of the transparent plate 66, defining an air pressurized void or space therebetween. In one embodiment, the transparent sheet 64 rises by an amount within a range of 1-3 millimeters (mm) in a central region of the transparent plate 66 - central meaning spaced inward from the peripheral edge 82 of the transparent plate 66 and laterally aligned with a centroid of the transparent plate 66.

In one embodiment, step 304 is performed by the system of FIG. 13A including operating the stepper motor 108 to drive a piston of the air cylinder 110. While a controlled volume of air is being injected, the rate of piston movement can be varied. The movement can be slower at first to initiate peeling of the transparent sheet 64 from the transparent plate 66 at the notches 84. Then, when peeling has been properly initiated, the rate of motion can speed up to complete lifting the transparent sheet to a minimal time. In an alternative embodiment, step 304 can be performed by the system of FIG. 13B by operating the peristaltic pump 130. In another alternative embodiment, step 304 can be performed by yet another device such as a syringe pump.

According to 306, the air control system 16 is operated to evacuate the space between the transparent sheet 64 and the transparent plate 66. In response to 306, the transparent sheet 64 is pressed against the top surface 76 of the transparent plate 66.

In one embodiment, step 306 is performed by the system of FIG. 13A by coupling conduit 18 to a vacuum system 100. In an alternative embodiment, step 306 is performed by the system of 13B using peristaltic pump 130. Yet other ways of forming a negative gauge pressure or vacuum can include expanding a bellows or diaphragm.

According to 308, the lower face 62 is moved to build plane 54. Step 308 can involve lateral motion along X and/or vertical motion along Z, depending in part upon a type of movement mechanism 24 employed.

According to 310, the light engine 30 is operated to selectively cure the photocurable resin 14 at build plane 54. This will accrete a layer of hardened resin upon the lower face 62, thereby forming a new lower face 62.

According to step 312, the lower face 62 is translated vertically and/or horizontally away from the build plane 54. Steps 304 to 312 are repeated in part or in whole to complete fabrication of the 3D article 3.

The flowcharts of FIGS. 14-17 illustrate particular steps that can be implemented in a number of different embodiments of methods of manufacturing a 3D article 3. It is to be understood that various combinations of these steps can be combined. For example, steps 304 and 306 of FIG. 17 can be utilized with either of methods 150 and 200. For either of methods 150 and 200, the sequence of steps 304 and 306 can be performed when the build plate 28 is in the forward (+X) position spaced from the build plane 54. Additionally, the calibration method 170 can be utilized with any of methods 150, 200, and 300.

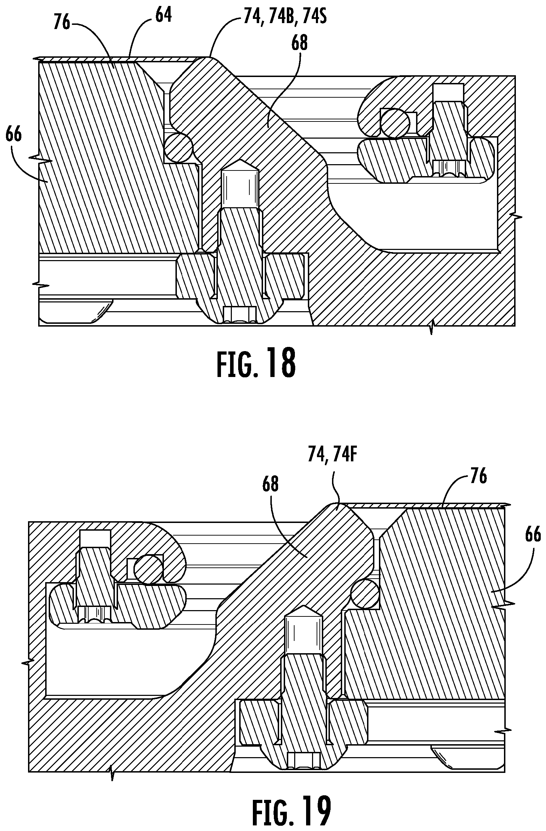

FIGS. 18 and 19 are sectional drawings illustrating a particular design for the rim 74. Referring back to FIG. 7, rim 74 has a backward portion 74B, side portions 74S, and a forward portion 74F. Referring to FIGS. 4A, 4B, 5A, 5B, and 6, the backward portion 74B includes a linear portion of the rim 74 that is farthest in the (-X) direction. The forward portion 74F includes a linear portion of the rim 74 that is farthest in the (+X) direction. The side portions 74S include linear portions of the rim 74 that are aligned with the X-axis and couple the backward portion 74B to the forward portion 74F. The rim 74 varies in height as explained infra.

FIG. 18 is a cross-sectional drawing illustrating the backward 74B or side 74S portion. The backward 74B and side 74S portions of rim 74 extend above the upper surface 76 of the transparent plate 66. This facilitates evacuation of air between the transparent sheet 64 and transparent plate 66 during step 306 of method 300.

On the other hand the forward portion 74F of rim 74 is coplanar with or below the upper surface 76 of the transparent plate 66. This facilitates movement of the photocurable resin 14 during translation of the lower face 62 between the forward (+X) and backward (-X) translations to and from the build plane 54. The planar upper surface 76 of the transparent plate 66 can extend zero to 0.2 millimeter (mm) above the forward portion 74F of rim 74.

The specific embodiments and applications thereof described above are for illustrative purposes only and do not preclude modifications and variations encompassed by the scope of the following claims.

The specific embodiments and applications thereof described above are for illustrative purposes only and do not preclude modifications and variations encompassed by the scope of the following claims.

## Claims

1. A three-dimensional (3D) printing system configured to manufacture a three-dimensional (3D) article comprising:
a base;
a build vessel supported by the base and configured to contain a body of photocurable resin and including:
a transparent plate having a planar upper surface and a peripheral edge;
a support frame laterally surrounding and supporting the transparent plate, the support frame defining a conduit that extends to the peripheral edge of the transparent plate; and
a transparent sheet tensioned over the planar upper surface of the transparent plate and extending over the support frame;
an air control system fluidically coupled to the conduit;
a build plate coupled to a movement mechanism;
a light engine configured to selectively apply radiation to a build plane which is directly above the transparent sheet; and
a controller programmed to:
(1) operate the air control system to inject a controlled volume of air into the conduit, the controlled volume of air inflating a volume of air between the transparent sheet and the transparent plate;
(2) operate the air control system to apply a controlled negative gauge pressure to the conduit, the controlled negative gauge pressure extracting the air between the transparent sheet and the transparent plate until the transparent sheet presses against the planar upper surface of the transparent plate;
(3) operate the movement mechanism to position a lower face of the build plate or the 3D article at the build plane;
(4) operate the light engine to selectively irradiate and to harden a layer of the photocurable resin over the build plane to redefine the lower face;
(5) operate the movement mechanism to move the lower face of the 3D article away from the build plane; and
(6) form additional layers of the 3D article to complete fabrication of the 3D article, an individual layer formed by repetition of some or all of steps (1)-(5).

2. The 3D printing system of claim 1 wherein the transparent plate includes a notch along the peripheral edge of the transparent plate that is in fluid communication with the conduit; and wherein preferably the transparent plate defines a fluid channel recessed into the planar upper surface that is in fluid communication with the notch.

3. The 3D printing system of any one of claims 1 or 2 wherein the transparent plate defines a fluid channel recessed into the planar upper surface that is in fluid communication with the conduit.

4. The 3D printing system of any one of claims 1 to 3 wherein the support frame includes:
and uppermost rim that laterally surrounds the transparent plate; and
clamping frame that laterally surrounds the uppermost rim of the support frame and
clamps a peripheral edge of the transparent sheet; and wherein preferably the transparent sheet is tensioned over the uppermost rim of the support frame and extends downward to the clamping frame.

5. The 3D printing system of any one of claims 1 to 4 wherein the support frame includes an uppermost rim that surrounds the transparent plate; and wherein preferably at least a first portion of the uppermost rim is coplanar with or below the planar upper surface of the transparent plate; and wherein preferably the uppermost rim includes a second portion that extends above the planar upper surface of the transparent plate; and/or wherein preferably the planar upper surface of the transparent plate is zero to 0.2 millimeters (mm) above the first portion of the uppermost rim.

6. The 3D printing system of any one of claims 1 to 5 wherein the air control system includes a peristaltic pump.

7. The 3D printing system of any one of claims 1 to 6 wherein the air control system includes a motorized air cylinder operated by the controller to perform step (1) and a vacuum pump operated by the controller to perform step (2).

8. The 3D printing system of any one of claims 1 to 7 wherein the injected controlled volume of air is in a range of 1.0 to 3.0 milliliters (mL) per 10 square centimeters (cm) of an area of the transparent sheet over the upper surface of the transparent plate.

9. The 3D printing system of any one of claims 1 to 8 wherein, during step (1), the transparent sheet is vertically lifted by a distance d above the upper surface of the transparent plate, d is in a range of 1 to 3 millimeters (mm) at a central location or portion of the transparent sheet relative to the peripheral edge.

10. A method of manufacturing a 3D article comprising:
(1) providing a 3D printing system including:
a base;
a build vessel supported by the base and configured to contain a body of photocurable resin and including:
a transparent plate having a planar upper surface and a peripheral edge;
a support frame laterally surrounding and supporting the transparent plate, the support frame defining a conduit that extends to the peripheral edge of the transparent plate; and
a transparent sheet tensioned over the planar upper surface of the transparent plate and extending over the support frame;
an air control system fluidically coupled to the conduit;
a build plate coupled to a movement mechanism;
a light engine configured to selectively apply radiation to a build plane which is directly above the transparent sheet;
(2) operating the air control system to inject a controlled volume of air into the conduit, the controlled volume of air defining a volume of air between the transparent sheet and the transparent plate;
(3) operating the air control system to apply a controlled negative gauge pressure to the conduit, the controlled negative gauge pressure extracting the air between the transparent sheet and the transparent plate until the transparent sheet presses against the planar upper surface of the transparent plate;
(4) operating the movement mechanism to position a lower face of the build plate or the 3D article at the build plane;
(5) operating the light engine to selectively irradiate and to harden a layer of the photocurable resin over the build plane to redefine the lower face;
(6) operating the movement mechanism to move the lower face of the 3D article away from the build plane; and
(7) forming additional layers of the 3D article to complete fabrication of the 3D article, an individual layer formed by repetition of some or all of steps (2)-(6).

11. The method of claim 10 wherein step (2) is performed by operating a peristaltic pump.

12. The method of claims 10 or 11 wherein step (2) is performed by operating a motorized air cylinder.

13. The method of any one of claims 10 to 12 wherein step (3) is performed by fluidically coupling the conduit to a vacuum pump.

14. The method of any one of claims 10 to 13 wherein during step (1) the injected controlled volume of air is in a range of 1.0 to 3.0 milliliters (mL) per 10 square centimeters (cm) of the area of an area of the transparent sheet over the upper surface of the transparent plate.

15. The method of any one of claims 10 to 14 wherein during step (2) the transparent sheet is vertically lifted by a distance d above the upper surface of the transparent plate, d is in a range of 1 to 3 millimeters (mm) at a central location or portion of the transparent sheet relative to the peripheral edge.
